# EUROPÄISCHE PATENTSCHRIFT

(11) **EP 2 212 137 B1**
(45) Veröffentlichungstag und Bekanntmachung des Hinweises auf die Patenterteilung: **24.04.2013**
(21) Anmeldenummer: 08850967.4
(22) Anmeldetag: 08.10.2008
(51) Int. Cl.: B60H 1/00

(54) **VERFAHREN ZUR STEUERUNG EINER KLIMAANLAGE IN EINEM FAHRZEUG**
METHOD FOR CONTROLLING AN AIR CONDITIONING SYSTEM IN A VEHICLE
PROCÉDÉ POUR COMMANDER UNE INSTALLATION DE CONDITIONNEMENT D'AIR DANS UN VÉHICULE

(30) Priorität: 16.11.2007 DE 102007056356
(43) Veröffentlichungstag der Anmeldung: 04.08.2010
(73) Patentinhaber: Bayerische Motoren Werke Aktiengesellschaft, 80809 München (DE)
(72) Erfinder: HOFHAUS, Joern, 85354 Freising (DE); SCHMIDT, Christian, 82110 Germering (DE)
(74) Vertreter: Wesel-Mair, Julia
(86) Internationale Anmeldenummer: PCT/EP2008/008467
(87) Internationale Veröffentlichungsnummer: WO 2009/062571

(56) Entgegenhaltungen:
- EP-A- 0 780 253
- DE-A1-102006 034 231
- KAEFER O: "PKW-KLIMATISIERUNG - UMLUFTAUTOMATIK MIT FEUCHTEREGELUNG IM FAHRZEUGINNENRAUM" ATZ AUTOMOBILTECHNISCHE ZEITSCHRIFT, VIEWEG PUBLISHING, WIESBADEN, DE, Bd. 100, Nr. 6, 1. Juni 1998 (1998-06-01), Seiten 436-438,440,4, XP000765349 ISSN: 0001-2785

## Beschreibung

Die Erfindung bezieht sich auf ein Verfahren zur Steuerung einer Klimaanlage in einem Fahrzeug zur Reduzierung des Feuchte-Eintritts in den Fahrzeuginnenraum.

Bei den meisten Kraftfahrzeugen erfolgt die Frischluftansaugung der Heiz-Klimaanlage fast ausschließlich über den Spalt, der sich zwischen der Motorraumhaube und der Windschutzscheibe ergibt. Bei starkem Regen oder beim Durchfahren einer Waschstraße können jedoch erhebliche Wassermengen in die Aggregateräume, die sich unterhalb der Motorraumhaube befinden, eindringen. Damit eine relativ trockene Frischluft durch die Frischluftansaug-Öffnung in den Fahrzeuginnenraum bzw. in die Heiz-Klimaanlage einströmen kann, sind im Aggregateraum konstruktive Maßnahmen zum Trennen von Luft und Wasser, also zur Wasserabscheidung vorgesehen.

Die Auslegung derartiger konstruktiver Maßnahmen orientiert sich in der Regel an der maximal zu erwartenden Wassermenge, wie sie z. B. bei tropischen Regenfällen oder bei sog. US-Waschanlagen, die mit enormer Wassermenge die Fahrzeuge reinigen, auftreten können. Dabei muss sichergestellt sein, dass selbst bei diesen Bedingungen auch bei Betrieb der Klimaanlage, insbesondere bei hohem Luftstrom, kein Wasser angesaugt wird. Diese konstruktiven Maßnahmen führen häufig dazu, dass die Frischluftansaugung einen erhöhten Strömungswiderstand aufweist, was nachteilig für die erzielte Luftmenge und die Akustik des Gebläses ist.

Um eine möglichst trockene Luft ansaugen zu können, offenbart die DE 10 2004 055 259 B3 eine Luftzuführungsvorrichtung für die Fahrgastzelle eines Fahrzeugs, bei der im axialen Ansaugbereich des Klimagebläses ein dem Klimagebläse vorgeschaltetes, rotierendes Element vorgesehen ist. Das rotierende Element überdeckt den Lufteintrittsbereich derart, dass alle angesaugten Tropfen auf dieses Element auftreffen. Durch die Rotation des Elements werden die angesaugten Tropfen nach außen geschleudert, wo sie von Tropfenauffangelementen aufgefangen und anschließend abgeleitet werden. Eine derartige Luftzuführungsvorrichtung ist äußerst aufwendig und benötigt viel Platz.

Alternativ dazu offenbart die DE 10 2006 018 905 A1 eine Luftleitungsanordnung zur Leitung von Einsaugluft bei einem Fahrzeug, wobei die Luftleitungsanordnung mit einem Wasserabscheidungsmittel zur Abscheidung von Wasser aus der Einsaugluft versehen ist. Nachteilig ist hierbei dass das Wasserabscheidungsmittel nur eine begrenzte Aufnahmefähigkeit hat und somit für den Einsatz bei extrem hohen Wassermengen nicht ausreichend ist. Alle konstruktiven Maßnahmen haben gemeinsam, dass dadurch zusätzliche Kosten verursacht werden.

Weiterhin wird aus dem nächstliegenden Stand der Technik, Dokument EP 0 780 253 A1, ein Verfahren zur Steuerung einer Klimaanlage in einem Fahrzeug bekannt, wobei die klimaanlage in Abhängigkeit von der absoluten Luftfeuchte im Außenbereich gesteuert wird.

Es ist Aufgabe der Erfindung, ein Verfahren anzugeben, welches auf eine einfache und kostengünstige Weise eine Reduzierung des Feuchte-Eintritts in den Fahrgastraum ermöglicht.

Diese Aufgabe wird erfindungsgemäß durch den Gegenstand des unabhängigen Patentanspruchs gelöst. Vorteilhafte Weiterbildungen sind die Gegenstände der abhängigen Patentansprüche.

Der Erfindung liegt die Erkenntnis zugrunde, dass eine Reduzierung des Feuchte-Eintritts durch eine entsprechende Ansteuerung der Klimaanlage möglich ist. Das erfindungsgemäße Verfahren zur Steuerung der Klimaanlage zeichnet sich dadurch aus, dass in Abhängigkeit von einem Sensorsignal ein Maß für die an der Frischluftansaug-Öffnung anfallende Wassermenge ermittelt wird, und in Abhängigkeit vom dem ermittelten Maß für die an der Fischluftansaug-Öffnung anfallende Wassermenge die Klimaanlage derart gesteuert wird, dass die durch die Frischluftansaug-Öffnung angesaugte Luftmenge reduziert wird. Die grundsätzliche Idee liegt somit darin, in einem ersten Schritt ein Sensorsignal auszuwerten, welches Rückschlüsse auf die anfallende Wassermenge im Haubenspalt zulässt. Wird eine entsprechende Wassermenge detektiert, kann im nächsten Schritt mit geeigneten Maßnahmen auf die Gefahr des Ansaugens von Wasser reagiert werden, indem die angesaugte Frischluftmenge reduziert wird.

Vorteilhafterweise wird die durch die Frischluftansaug-Öffnung angesaugte Luftmenge gerade dann reduziert, wenn das ermittelte Maß für die an der Fischluftansaug-Öffnung anfallende Wassermenge einen vorgegebenen Grenzwert überschreitet. Dadurch wird die Steuerung der Klimaanlage nur dann verändert, wenn extrem hohe Wassermassen vorliegen. Eine Beeinträchtigung der Fahrzeuginsassen wird verhindert, da die geänderte Klimaanlagenregelung in der Regel nur für eine kurze Zeit (während eine Platzregens oder beim Durchfahren einer Waschstraße) vorgenommen wird.

Dieses Verfahren bietet sich idealerweise dann an, wenn das Fahrzeug eine Waschstraße befährt, bei der mit extrem hohen Wassermenge zu rechnen ist. Das Befahren einer Waschstraße kann durch Auswertung zusätzlicher Signale erfolgen. So kann in einer vorteilhaften Ausgestaltung der Erfindung die durch die Frischluftansaug-Öffnung angesaugte Luftmenge nur dann reduziert werden, wenn zusätzlich die Geschwindigkeit des Fahrzeugs kleiner als ein vorgegebener Geschwindigkeitsgrenzwert ist.

Eine weitere Einschränkung des Verfahrens kann vorgenommen werden, indem die Maßnahmen zur Reduzierung der angesaugten Luftmenge nur dann vorgenommen werden, wenn zusätzlich die Gebläseleistung der Klimaanlage größer als ein vorgegebener Gebläsegrenzwert ist, und/oder wenn zusätzlich die Außentemperatur größer als ein vorgegebener Außentemperaturgrenzwert, insbesondere größer als der Gefrierpunkt ist. Eine Auswertung der Außentemperatur ist vor allem dann sinnvoll wenn die Gefahr besteht, dass der detektierende Sensor vereist ist und somit trotz Trockenheit ein Signal liefern würde, was auf eine sehr hohe Wassermenge vor der Frischluftansaüg-Öffnung hindeuten würde.

Vorteilhafterweise können zur Reduzierung der durch die Frischluftansaug-Öffnung angesaugten Luftmenge verschiedene Maßnahmen zur Steuerung der Klimaanlage vorgenommen werden. So kann die durch die Frischluftansaug-Öffnung angesaugte Luftmenge dadurch reduziert werden, dass der Öffnungswinkel der Umluftklappen vergrößert wird und/oder dass die Gebläsespannung reduziert wird. Im Extremfall könnte sogar die Frischluftklappe gedrosselt oder komplett geschlossen werden, so dass kein Wasser über die Ansaugluft mitgerissen werden kann.

Prinzipiell wird die durch die Frischluftansaug-Öffnung angesaugte Luftmenge nur solange reduziert, bis zumindest eine der einleitenden Bedingungen zur Reduzierung der angesaugten Luftmenge nicht mehr erfüllt ist. Werden weitere Signale - wie Geschwindigkeit und Außentemperatur - ausgewertet, so wird die geänderte Steuerung der Klimaanlage auch dann zurückgenommen, wenn eine höhere Geschwindigkeit ermittelt wird, oder die Außentemperatur unter den Gefrierpunkt fällt.

Damit es zu keiner Beeinträchtigung der Fahrzeuginsassen aufgrund der geänderten Steuerung der Klimaanlage kommt, kann das erfindungsgemäße Verfahren vorteilhafterweise derart ausgestaltet sein, dass die geänderte Steuerung nicht zu lange vorgenommen wird. Idealerweise kann die durch die Frischluftansaug-Öffnung angesaugte Luftmenge nur solange reduziert werden, bis ein vorgegebenes Zeitintervall abgelaufen ist. Um ein Beschlagen der Scheiben zu verhindern, kann die Innenraumfeuchte bzw. ein mit der Innenraumfeuchte korrelierendes Signal, bspw. das Signal eines Beschlagsensors ausgewertet werden. Überschreitet die Innenraumfeuchte einen vorgegebenen Grenzwert, kann die Klimaanlage wieder in die ursprüngliche Steuerungsart betrieben werden, oder in einen Entfeuchtungsmodus geschaltet werden.

Zum Ermitteln der an der Frischluftansaug-Öffnung anfallenden Wassermenge bzw. einer damit korrelierenden Größe können verschiedene Sensoren verwendet werden. Der Sensor kann ein ausschließlich für diesen Zweck verbauter oder erweiterter Sensor sein. Vorteilhafterweise kann das Maß für die an der Frischluftansaug-Öffnung anfallende Wassermenge in Abhängigkeit vom Signal eines Füllstandanzeige-Sensors im Aggregateraum, der die derzeitige Stauhöhe an einer bestimmten Stelle anzeigt, und/oder in Abhängigkeit vom Signal einer optischen Sensoreinheit zur Ermittlung des Tropfenflugs vor der Frischluftansaug-Öffnung ermittelt werden.

Alternativ oder zusätzlich kann auch ein bereits vorhandener Sensor benutzt werden, wenn dieser geeignet ist, Rückschlüsse auf die anfallende Wassermenge im Aggregateraum bzw. an der Frischluftansaug-Öffnung zu liefern. Hierfür ist insbesondere ein Regensensor geeignet, welcher in jedem Fahrzeug mit Wischerautomatik typischerweise im Fuß des Innenspiegels verbaut ist.

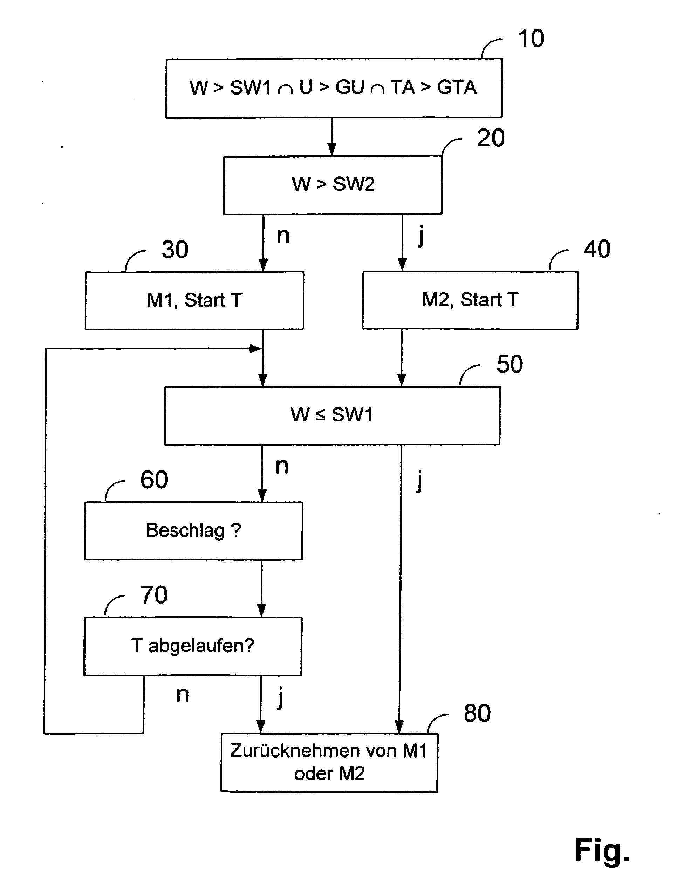

In der Zeichnung ist ein Ausführungsbeispiel der Erfindung dargestellt. Dabei zeigt die einzige Fig. eine vorteilhafte Ausgestaltung des erfindungsgemäßen Verfahrens, welches in einem Steuergerät, bspw. in einem Klimasteuergerät implementiert sein kann.

Zu Beginn des Verfahrens wird im Schritt 10 ein ermitteltes Maß für die an der Frischluftansaug-Öffnung angesammelte Wassermenge W mit einem vorgegebenen ersten Grenzwert SW1 verglichen, wobei der Grenzwert fest oder - in Abhängigkeit verschiedener Parameter - variabel vorgegeben werden kann. Gleichzeitig wird die Gebläsespannung U mit einem vorgegebenen Gebläsegrenzwert GU, und die Außentemperatur TA mit einem vorgegebenen Außentemperaturgrenzwert GTA, der in diesem Beispiel dem Gefrierpunkt entspricht, verglichen. Überschreitet, das ermittelte Maß für die angesammelte Wassermenge W den ersten Grenzwert SW1 und überschreitet die Gebläsespannung U den vorgegebenen Gebläsegrenzwert GU und überschreitet die ermittelte Außentemperatur TA den vorgegebenen Außentemperaturgrenzwert GTA, wird in einem nächsten Schritt 20 überprüft, ob das ermittelte Maß für die angesammelte Wassermenge W auch noch einen vorgegebenen zweiten Grenzwert SW2, der größer als der vorgegebene erste Grenzwert SW1 ist, überschreitet. Der zweite Grenzwert SW2 kann dabei derart festgelegt werden, dass dieser nur bei sehr hohen Wassermengen W, wie sie z. B. beim Befahren einer Waschstraße auftreten, überschritten wird. Hier nicht dargestellt, aber ebenfalls möglich, ist eine Auswertung der Fahrzeuggeschwindigkeit hinsichtlich eines Unterschreitens einer vorgegebenen Grenzgeschwindigkeit.

In Abhängigkeit davon, ob das ermittelte Maß W nur den ersten, oder auch den zweiten Grenzwert SW2 überschreitet, werden unterschiedliche Maßnahmen M1 oder M2 zur Reduzierung des Wassereintritts in die Klimaanlage bzw. in den Fahrzeuginnenraum vorgenommen.

Um die durch die Frischluftansaug-Öffnung angesaugte Luftmenge (und damit angesaugte Wassermenge) zu reduzieren, wird bei Überschreiten des ersten Grenzwertes SW1, aber Unterschreiten des zweiten Grenzwertes SW2 zum Schritt 30 übergegangen und vorgegebene erste Maßnahmen M1 zur Reduzierung der gesaugten Luft eingeleitet. Bei diesen vorgegebenen ersten Maßnahmen M1 handelt es sich um eine Reduzierung der Gebläsespannung und um eine Vergrößerung des Öffnungswinkels der Umluftklappe. Gleichzeitig wird ein Timer T gestartet. Ist das Maß für die angesammelte Wassermenge W größer als der vorgegebene zweite Grenzwert SW2, wird zum Schritt 40 übergegangen und vorgegebene zweite Maßnahmen M2 zur Reduzierung der angesaugten Luft eingeleitet. Hier wird die Frischluftklappe vollständig geschlossen, so dass kein Wasser eintritt. Gleichzeitig wird auch hier ein Timer T gestartet.

Nach Einleiten der Maßnahmen M1 oder M2 und Starten des Timers T wird zum Schritt 50 übergegangen. Dort wird überprüft, ob das ermittelte Maß für die angesammelte Wassermenge W nicht mehr den vorgegebenen ersten Grenzwert SW1 überschreitet. Ist dies der Fall, werden im Schritt 80 die vorgenommenen Maßnahmen M1 oder M2 zur Reduzierung der angesaugten Frischluft wieder zurückgenommen und die Klimaanlage in wieder im herkömmlichen Sinne gesteuert bzw. geregelt. Überschreitet die angesammelte Wassermenge W weiter den Grenzwert SW1 wird im Schritt 60 überprüft, ob ein Beschlag der Scheiben vorliegt. Falls dies der Fall ist, wird ebenfalls zu Schritt 80 übergegangen und die vorgenommenen Maßnahmen M1 oder M2 zur Reduzierung der angesaugten Frischluft wieder zurückgenommen. Umfasst die Klimaanlage einen Entfeuchtungsmodus, kann dieser aktiviert werden.

Liegt kein Beschlagen der Scheiben vor, wird im Schritt 70 überprüft, ob der Timer abgelaufen ist. Solange der Timer noch nicht abgelaufen ist, wird wieder zum Schritt 50 zurückgesprungen, und die verschiedenen Kriterien gemäß Schritt 50, 60 und 70 solange überprüft, bis ein Kriterium erfüllt ist. Dann wird sofort zum Schritt 80 übergegangen und die Maßnahmen M 1 oder M2 zur Reduzierung der angesaugten Frischluft wieder zurückgenommen. Die Routine ist beendet.

Der Vorteil der Erfindung liegt darin, dass die Luftansaugung bzw. Wasserabscheidung so ausgelegt werden kann, dass die Strömungsverluste gegenüber dem heutigen Stand reduziert werden können und lediglich im Falle hoher Wassermengen in Verbindung mit einer hohen Frischluftmenge in das System in die Klimaanlagensteuerung eingegriffen wird. Darüber hinaus ist das System in der Lage, Konzeptschwächen der Wasserabscheidung, die z. B. durch die Anforderungen an den Fußgängerschutz verursacht werden, auszugleichen.

## Patentansprüche

1. Verfahren zur Steuerung einer Klimaanlage in einem Fahrzeug zur Reduzierung des Feuchte-Eintritts in den Fahrzeuginnenraum, wobei in Abhängigkeit eines Sensorsignals ein Maß für die an der Frischluftansaug-Öffnung anfallende Wassermenge (W) im Haubenspalt ermittelt wird, und in Abhängigkeit vom dem ermittelten Maß für die an der Fischluftansaug-Öffnung anfallende Wassermenge (W) im Haubenspalt die Klimaanlage derart gesteuert wird, dass die durch die Frischluftansaug-Öffnung angesaugte Luftmenge reduziert wird (M1, M2).

2. Verfahren nach Anspruch 1, **dadurch gekennzeichnet, dass** die durch die Frischluftansaug-Öffnung angesaugte Luftmenge reduziert wird, wenn das ermittelte Maß für die an der Fischluftansaug-Öffnung anfallende Wassermenge (W) einen vorgegebenen Grenzwert (SW1) überschreitet.

3. Verfahren nach Anspruch 2, **dadurch gekennzeichnet, dass** die durch die Frischluftansaug-Öffnung angesaugte Luftmenge reduziert wird, wenn zusätzlich die Geschwindigkeit des Fahrzeugs kleiner als ein vorgegebener Geschwindigkeitsgrenzwert ist, und/oder wenn zusätzlich die Gebläseleistung (U) der Klimaanlage größer als ein vorgegebener Gebläsegrenzwert (GU) ist, und/oder wenn zusätzlich die Außentemperatur (TA) größer als ein vorgegebener Außentemperaturgrenzwert (GTA), insbesondere größer als der Gefrierpunkt ist.

4. Verfahren nach einem der vorangegangenen Ansprüche, **dadurch gekennzeichnet, dass** die durch die Frischluftansaug-Öffnung angesaugte Luftmenge dadurch reduziert wird, indem der Öffnungswinkel der Umluftklappen vergrößert wird und/oder dass die Gebläsespannung reduziert wird und/oder dass die Frischluftklappe gedrosselt oder geschlossen wird.

5. Verfahren nach einem der vorangegangenen Ansprüche, **dadurch gekennzeichnet, dass** die durch die Frischluftansaug-Öffnung angesaugte Luftmenge solange reduziert wird, bis eine vorgegebenes Zeitintervall (T) abgelaufen ist oder bis zumindest eine Bedingungen zur Reduzierung der durch die Frischluftansaug-Öffnung angesaugte Luftmenge nicht mehr erfüllt ist (50), oder bis die Innenraumfeuchte einen vorgegebenen Grenzwert (60) überschreitet.

6. Verfahren nach einem der vorangegangen Ansprüche, **dadurch gekennzeichnet, dass** das Maß für die an der Frischluftansaug-Öffnung anfallende Wassermenge (W) in Abhängigkeit vom Signal eines Füllstandanzeige-Sensors im Aggregateraum und/oder in Abhängigkeit vom Signal einer optischen Sensoreinheit zur Ermittlung des Tropfenflugs vor der Frischluftansaug-Öffnung oder in Abhängigkeit vom Signal eines Regensensors ermittelt wird.

## Claims

1. A method for controlling an air conditioning system in a vehicle to reduce the entry of moisture into the vehicle interior, wherein, depending on a sensor signal, a measure of the water quantity (W) accumulating at the fresh air intake opening in the bonnet gap is determined, and depending on the determined measure of the water quantity (W) accumulating at the fresh air intake opening in the bonnet gap, the air conditioning system is controlled in such a way that the air quantity drawn in through the fresh air intake opening is reduced (M1, M2).

2. A method according to claim 1, **characterised in that** the air quantity drawn in through the fresh air intake opening is reduced when the determined amount of the water quantity (W) accumulating at the fresh air intake opening exceeds a predetermined limit value (SW1).

3. A method according to claim 2, **characterised in that** the air quantity drawn in through the fresh air intake opening is reduced if, in addition, the speed of the vehicle is less than a predetermined speed limit value, and/or if, in addition, the fan output (U) of the air conditioning system is greater than a predetermined fan limit value (GU), and/or if, in addition, the external temperature (TA) is greater than a predetermined external temperature limit value (GTA), more especially greater than freezing point.

4. A method according to any one of the preceding claims, **characterised in that** the air quantity drawn in through the fresh air intake opening is reduced by the opening angle of the air recirculation flaps being increased and/or by the fan voltage being reduced and/or by throttling or closing the fresh air flap.

5. A method according to any one of the preceding claims, **characterised in that** the air quantity drawn in through the fresh air intake opening is reduced until a predetermined time interval (T) has elapsed or until at least one condition to reduce the air quantity drawn in through the fresh air intake opening is no longer fulfilled (50), or until the interior humidity exceeds a predetermined limit value (60).

6. A method according to any one of the preceding claims, **characterised in that** the measure of the water quantity (W) accumulating at the fresh air intake opening is determined depending on the signal of a filling level display sensor in the equipment compartment and/or depending on the signal of an optical sensor unit for determining the droplet flight in front of the fresh air intake opening or depending on the signal of a rain sensor.

## Revendications

1. Procédé de commande d'une installation de climatisation dans un véhicule de façon à réduire la pénétration d'humidité dans son habitacle, selon lequel, en fonction d'un signal de capteur on détermine une mesure de la quantité d'eau (W) pénétrant par l'ouverture d'aspiration d'air frais, dans l'ouïe du capot, et en fonction de la mesure déterminée de la quantité d'eau (W) pénétrant par l'ouverture d'air frais, dans l'ouïe de capot, l'installation de climatisation est commandée de façon à réduire la quantité d'air (M1, M2) aspirée par l'ouverture d'aspiration d'air frais.

2. Procédé conforme à la revendication 1,
**caractérisé en ce que**
l'on réduit la quantité d'air aspirée par l'ouverture d'aspiration d'air frais lorsque la mesure déterminée de la quantité d'air (W) pénétrant par l'ouverture d'aspiration d'air frais dépasse une valeur de seuil prédéfinie (SW 1).

3. Procédé conforme à la revendication 1,
**caractérisé en ce que**
l'on réduit la quantité d'air aspirée par l'ouverture d'aspiration d'air frais lorsque en outre la vitesse du véhicule est inférieure à une vitesse limite prédéfinie et/ou lorsque, en outre, la puissance de soufflage (U) de l'installation de climatisation est supérieure à une valeur limite de soufflage prédéfinie (GU), et/ou lorsque en outre la température externe (TA) est supérieure à une valeur limite prédéfinie de la température externe (GTA), en particulier supérieure au point de congélation.

4. Procédé conforme à l'une des revendications précédentes,
**caractérisé en ce que**
la quantité d'air aspirée par l'ouverture d'aspiration d'air frais est réduite en augmentant l'angle d'ouverture de la soupape de circulation d'air et/ou en réduisant la tension de soufflage et/ou en étranglant ou en fermant le clapet d'air frais.

5. Procédé conforme à l'une des revendications précédentes,
**caractérisé en ce que**
l'on réduit la quantité d'air aspirée par l'ouverture d'aspiration d'air frais jusqu'à ce qu'un intervalle de temps prédéfini (T) se soit écoulé ou jusqu'à ce qu'au moins une condition pour la réduction de la quantité d'air aspirée par l'ouverture d'aspiration d'air frais ne soit plus remplie (50), ou jusqu'à ce que l'humidité de l'habitacle du véhicule dépasse une valeur limite (60) prédéfinie.

6. Procédé conforme à l'une des revendications précédentes,
**caractérisé en ce que**
l'on détermine la mesure de la quantité d'eau (W) introduite par l'ouverture d'aspiration d'air frais en fonction du signal d'un capteur d'indication d'état de remplissage dans la chambre de l'unité et/ou en fonction du signal d'une unité de capteur optique pour la détermination de la présence de gouttes en amont de l'ouverture d'aspiration d'air frais ou en fonction du signal d'un capteur de pluie.
